# EUROPEAN PATENT APPLICATION

(11) **EP 4 691 786 A1**
(43) Date of publication of application: **11.02.2026**
(21) Application number: 24461609.0
(22) Date of filing: 06.08.2024
(51) Int. Cl.: B41M 3/00, B41F 17/00, B41M 7/00

(54) **SELECTIVE MATTE COLORING FOR ALUMINUM BEVERAGE CONTAINERS**

(71) Applicant: Canpack S.A., 30-302 Kraków (PL)
(72) Inventor: Maciejowski, Mariusz Adam, 30-302 Krakow (PL)
(74) Representative: Kuczynska, Teresa

(57) **Abstract**

Beverage containers may include a container body may include an outer surface. The containers may include a graphic disposed on at least a portion the container body, the graphic manufactured using a first ink, a second ink, and a lacquer. The graphic may include a first portion, characterized by a first color and a first reflectivity, where the first ink includes a matting agent. The graphic may include a second portion, characterized by a second color and a second reflectivity, different than the first reflectivity.

## Description

### BACKGROUND

Beverage and/or food storage cans, bottles, and other containers are often formed from plastic, aluminum, steel, or glass. These containers may be decorated using inks in order to produce designs and labels of various colors and finishing effects. In some instances, it may be desired to produce a storage container having a matte effect. To produce such a matte effect, a matting agents may be added to the storage container in order to reduce the reflectivity of a given portion of a container to produce a matte finish. Conventionally, in the field of aluminum cans, the matting agent has been mixed with a varnish or lacquer to produce a matte-finish coating that is applied on top of the ink to protect the ink from scratching. However, use of such matting agents in the lacquer dulls the colors of the ink. The resulting graphic may be lackluster, without the desired color intensity at the given portion. Therefore, improved methods and systems of producing containers with both matte finishes are needed.

In some instances, a designer may wish to decorate a storage container with both glossy and matte regions. Conventionally, this has only been done with steel containers. The bonding between the steel and ink may be sufficiently strong that no lacquer is needed to protect the ink. This enables different types of ink, such as a matte ink and a glossy ink, to be applied to the steel, with each ink producing the intended effect (e.g., matte finish or glossy finish) on the surface of the steel. However, due to the different material properties of aluminum, the lacquer is required to ensure that the ink is sufficiently scratch-resistant. Thus, conventionally finishing effects are imparted on an aluminum container by modifying the lacquer applied to some or all of the container. For example, a design may be created by applying one or more inks to the can, followed by an overprint lacquer that covers the inks to create the desired finish effect. For example, if a matte effect is desired, a lacquer including a matting agent (sometimes, "matte lacquer") may be applied. The design may therefore appear matte (having a lower reflectivity), but the colors may appear dull over the entire can due to the particles in the matting agent. Similarly, if a glossy effect is desired, a glossy lacquer is applied to produce the desired visual effect. Current design printers are unable to precisely control the alignment and application of lacquer over a storage container, such as a can, and therefore are unable to carefully align and apply two different lacquers (e.g., a glossy lacquer and a matte lacquer) to regions of the container corresponding to different inks and are therefore unable to consistently produce cans having a desired combination of glossy and matte regions. Therefore, improvements in producing aluminum storage containers with both glossy and matte regions are needed.

### BRIEF SUMMARY

A beverage container may include a container body may include an outer surface. The container may include a graphic disposed on at least a portion the container body, the graphic manufactured using a first ink, a second ink, and a lacquer. The graphic may include a first portion, characterized by a first color and a first reflectivity, where the first ink includes a matting agent. The graphic may include a second portion, characterized by a second color and a second reflectivity, different than the first reflectivity.

In some embodiments, the matting agent may include a synthetic aluminum silicate. The matting agent may include at least one of polyethylene, polypropylene, carnauba, or polytetrafluorethylene (PTFE). The ink and/or the lacquer may be applied to the beverage can via a thermochromic process. At least a portion of the beverage container may include aluminum. A ratio of the ink to the matting agent may be within a range of 2:1 to 4:1. The lacquer may be applied to the beverage container at a thickness of about 1 micron to about 5 microns, inclusive. The lacquer may include a glossy lacquer. The lacquer may include a matte lacquer. The lacquer may include a second matting agent.

A method of producing a beverage container with matte and glossy portions may include applying a first ink to a first portion of the beverage container. The first ink may include a matting agent. The method may include applying a second ink to a second portion of the beverage container. The method may include applying a lacquer over the first ink and the second ink. The method may include applying heat to the lacquer, the first ink, and the second ink such that the first ink, the second ink, and the lacquer adhere to the first portion and the second portion of the beverage container to form a decoration. The decoration may include a first graphic corresponding to the first portion characterized by a matte finish. The decoration may also include a second graphic corresponding to the second portion characterized by a glossy finish.

In some embodiments, the first ink may include a first color and the second ink may include a second color. The first ink and the second ink may include a first color. The lacquer may include a glossy lacquer. A ratio of the first ink to the matting agent may be within a range of 2:1 to 4:1.

A system for applying glossy and matte finishes to a beverage container may include a printing device that is configured to apply a first ink and a second ink to at least a portion of an outer surface of a beverage container. The system may include a coating device that is configured to apply a lacquer over the first ink and the second ink. The system may include a heating device that is configured to apply heat to the lacquer, the first ink, and the second ink to form a decoration. The decoration may include a first graphic characterized by a matte finish, and a second graphic characterized by a glossy finish.

The first ink and/or the second ink may be applied to a thickness of between 20 microns and 70 microns, inclusive. The system may be configured to produce glossy and matte finishes at least 800 cans per minute. The heating device may include a pin oven.

### BRIEF DESCRIPTION OF THE DRAWINGS

FIGS. 1A-1D illustrate one example of a container having glossy and matte portions of a desired decoration in accordance with the present invention.
FIG. 2 illustrates a system for applying a desired decoration with matte and glossy portions to a beverage container.
FIG. 3 illustrates a flowchart of a method for a producing a beverage container with matte and glossy portions.

### DETAILED DESCRIPTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The ensuing description provides exemplary embodiments only, and is not intended to limit the scope, applicability, or configuration of the disclosure. Rather, the description of the exemplary embodiments will provide those skilled in the art with an enabling description for implementing one or more exemplary embodiments. It being understood that various changes may be made in the function and arrangement of elements without departing from the spirit and scope of the invention as set forth in the appended claims.

Embodiments of the present invention are directed to systems and methods for manufacturing product containers (e.g., food and/or beverage cans, bottles, and the like) that include matte images and/or areas while maintaining a high color intensity. Aluminum may frequently be used to manufacture storage containers (e.g., cans) for food, beverages, and/or other objects in a wide variety of applications. Aluminum, however, may be relatively difficult to color, requiring a lacquer to protect inks applied to the aluminum from scratching and/or other damage. The color may be provided to the aluminum by the inks, whereas an effect (or finish) may be provided by the ink and/or lacquer. For example, to provide a matte finish, a matte ink (e.g., an ink with a matting agent mixed therein) may be applied to a surface of the aluminum and subsequently coated with a lacquer, which may be a matte finish lacquer or a glossy lacquer in various embodiments. As will be discussed in greater detail, properties of the matting agent within the ink may enable the matte finish (as well as the color intensity) of the matte ink to be visible on the surface of the aluminum, even if coated with a glossy lacquer. The matte finish may reduce the reflectivity of the finish. Sometimes, a glossy finish may be desired. To produce a glossy finish, a glossy ink (e.g., an ink that does not contain a matting agent) may be applied to a surface of the aluminum. A lacquer, such as a glossy lacquer, may be applied to the aluminum after the ink is applied. The combination of a glossy ink and a glossy lacquer may produce a glossy finish on the surface of the aluminum. For example, a glossy finish may include intense colors with a shiny (or reflective) effect.

In some embodiments, a single container may include regions of different finishes. For example, the container may include one or more glossy finish regions and one or more matte finish regions. Additionally, the level of reflectivity within one or more of the glossy finish regions may be different from one another and/or the level of reflectivity within one or more of the matte finish regions may be different from one another. Due to the constraints of current decorating equipment and the complexity of trying to apply different lacquers that correspond to different finish areas of a design in perfect alignment with the underlying ink, it is unfeasible to apply multiple lacquers to different regions of a single container. Therefore, embodiments of the present invention enable the production of aluminum containers with both matte and glossy finish regions using a single lacquer that may be applied to regions of both finish types.

The ability to produce both glossy and matte finish regions using a single lacquer may be accomplished, for example, by producing matte effects using a matte ink formed by mixing a matting agent having large particles (e.g., particles having a mean diameter (or largest lateral dimension) of at least 0.5 micron) with an ink to produce a matte ink, rather than by using a matte lacquer as conventionally done. For example, conventional matte lacquers include a matting agent having very small particles (e.g., less than 0.1 microns in diameter). When applied to an ink, the particles of the matting agent within the lacquer reduced the reflectivity of the underlying ink to produce a matte effect. However, as the lacquer covered the ink (which provides the color for the decoration), the matting agent also has the undesired effect of dulling the intensity of the color of the underlying ink. In contrast, embodiments of the present invention mix the matting agent with the ink, which enables the particles of the matting agent to be coated with the colors of the ink and help increase the color intensity of the ink, even after coated with a lacquer. Additionally, due to the larger size of the particles within the matting agent, a portion of some or all of the particles may extend beyond the layer of lacquer applied to the container and may make the matte finish of the ink visible through the glossy finish of the lacquer. Embodiments of the present invention may also use thinner layers of lacquer than conventional applications, which may help increase the intensity of the color of the underlying ink, as well as better enable the matte finish to extend through the glossy lacquer. For example, embodiments may have lacquer applied at a thickness of between about 1.5 microns and 3 microns, while conventional containers have lacquer thicknesses greater than 3 microns, including up to 5 microns. The reduction in thickness of the lacquer as disclosed herein may also enable a lesser amount of matting agent to be included in the matte ink, as will be discussed in greater detail below.

As noted above, the use of a matting ink, rather than matting lacquer may enable a container to include both glossy finish and matte finish regions. For example, one or more inks of various colors and/or reflectivity levels, including at least one matte ink and at least one glossy ink may be applied to the surface of a container, such as a can or other beverage container, to form a design. Each matte ink may include a matting agent that may include particles within a range of .5 microns to 2.5 microns, inclusive. Each glossy ink may not include a matting agent. The matte ink and the glossy ink may be selectively applied to the beverage container in order to produce a desired image or design. The desired image may be characterized by portions of matte and glossy effects, corresponding to areas to which the respective inks are applied. For example, areas that include a matte ink may have a matte effect, while areas that include a glossy ink may have a glossy effect. A single lacquer, such as a glossy lacquer, may then be applied over at least a substantial portion of each ink on the surface of the beverage container. to a thickness of about 1.5 microns to 3 microns, allowing some or all of the particles of the matting agent to extend beyond the thickness of the lacquer to produce the matte effect, even with the use of a glossy lacquer. The resulting beverage container may therefore include distinct shiny or glossy areas and matte areas, while maintaining the color intensity of the inks in some or all of the desired image.

While described primarily in the context of beverage cans, it will be appreciated that the systems and methods described herein may be utilized in other container manufacturing processes, especially those in which a glossy and matte finishes are to be applied to a relatively smooth surface. Additionally, the techniques described herein are not limited to aluminum beverage cans and may be utilized in other applications (such as other canning operations, bottling operations, and/or other operations in which a specific package is filled with a particular object and/or substance) and/or with other materials, such as other metals, glass, and/or plastic materials.

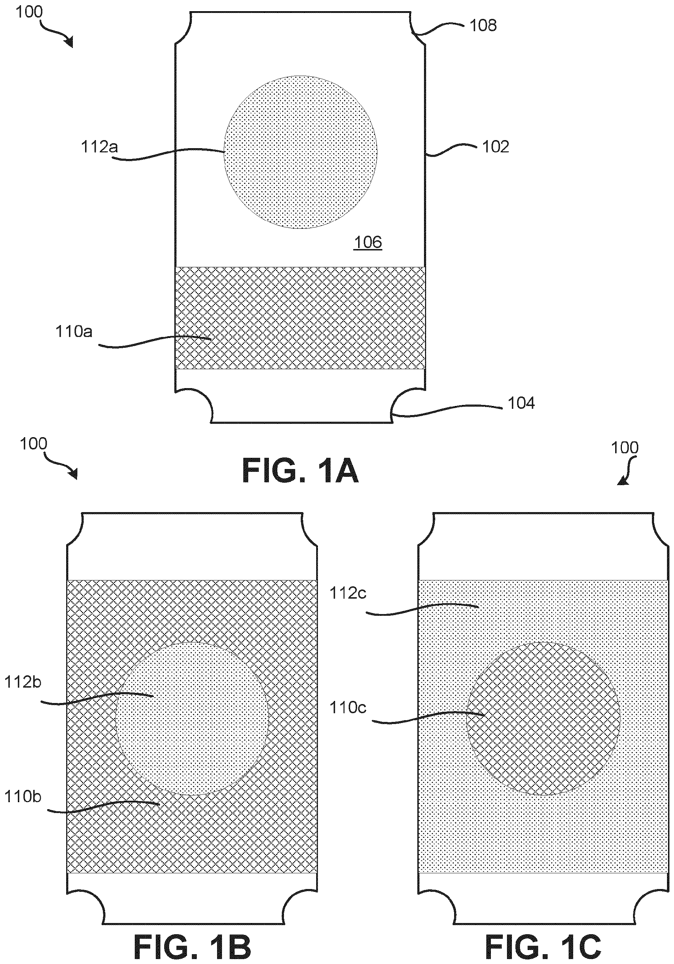

FIGs. 1A-1D illustrate one example of a container 100 having glossy and matte portions of a desired decoration in accordance with the present invention. As illustrated, container 100 is an aluminum can, however in other embodiments container 100 may be a glass bottle, plastic bottle, and/or other form of beverage container. Container 100 may include a container body 102 having a base 104, a generally cylindrical sidewall 106, and a neck 108. In some embodiments, a top may be affixed to a top end of neck 108 and may include a tab for opening the top. Container 100 may take other forms in various embodiments. A portion of the outer surface (e.g., of the sidewall 106) of container 100 may include a desired decoration including various matte portions 110 and/or glossy portions 112.

Each matte portion 110 may be formed from a matte ink covered with a glossy lacquer. The matte ink may include an ink that is mixed with a matting agent (and possibly a solvent). The matting agent may include a solvent, a number of matting particles, and/or other additives (such as, but not limited to, a light stabilizer, a UV absorber, fillers, and/or other additives). For example, the matting agent may include matting particles formed form silica, wax, thermoplastic resins, and/or other matting particles. A solids content of the matting agent may be between about 20% and 75% by weight of the matting agent in various embodiments. The matting particles may have particles with an average particle size of between 0.5 microns to 10 microns, inclusive. In some embodiments, the average particle size may be at least 1 micron. A ratio of ink to matting agent within the matte ink may be at least 1:5, at least 1:4, at least 1:3, at least 1:2, at least 1:1, and/or greater. Thus, the matte ink may include from between 20% to 50% ink by weight (based on the weight of the matted ink) of the ink and from between 50% to 80% by weight (based on the weight of the matted ink) of the matting agent. Where present, the solvent may be provided in various quantities, such as between 1% and 20% by weight of the matte ink.

Each glossy portion 112 may be formed from a glossy ink (e.g., an ink without any matting agent) and/or a matte ink with a low quantity of matting agent present. For example, in some embodiments, the glossy portion 112 (or a portion thereof) may be formed from a matte ink having the matting agent present in a quantity no greater than 50% by weight, no greater than 40% by weight, no greater than 30% by weight, no greater than 20% by weight, no greater than 10% by weight, or less, with lower levels of matting agent resulting in a glossier (e.g., more reflective) surface finish.

A thickness of the inks forming the decoration may be between 20 microns and 70 microns. The thickness of the inks may be uniform or substantially uniform (e.g., within 10% thickness uniformity) across the surface area of the decoration in some embodiments. In other words, the thickness of the inks may be the same or substantially the same regardless of whether matte inks (e.g., matte portion 110) or glossy inks (e.g., glossy portion 112) are used. In other embodiments, the thickness of the inks may vary. For example, the thickness of the inks may vary within the matte portion 110 and/or within the glossy portion 112 and/or may vary between the two portions. In other words, the glossy inks defining the glossy portion 112 may be applied at a different thickness than the matte inks defining the matte portion 110. Suitable inks for the matte and/or glossy inks may include, without limitation, Sun Chemical SUNDUO inks and Sun Chemical TAUPO inks. The decoration may be coated with one or more layers of a lacquer, such as a clear glossy overprint lacquer. The lacquer may be applied uniformly or substantially uniformly about the surface area of the decoration. In other words, a thickness of the lacquer may be substantially uniform across both the matte portion 110 and the glossy portion 112. In some embodiments, the lacquer may have a thickness of between about 0.5 microns to about 4.0 microns. Suitable lacquers may include, without limitation, Novochem Novoshild 4719, Novochem NovoShield 4788C, AkzoNobel Aquaprime 250, AkzoNobel Aquaprime 186, Metlac 815675, BPANI/PFASNI 815788, PPG 9319-801, PPG 9200-809/A sparkle, BPANI/PFASNIXG-W7037, Sherwin Williams 28Q07AE, and/or Novochem Novoshield 4765.

As illustrated in FIG. 1A, the desired decoration includes a matte portion 110a and a glossy portion 112a. The matte portion 110a may cover a portion of the sidewall 106 and extend about a circumference of the container 100 (e.g., a continuous stripe about the container 100). The glossy portion 112a may only be present on a portion of the sidewall 106 (e.g., an image, letter, etc.). In FIG. 1B, the matte portion 110b may cover substantially all of sidewall 106 (e.g., is not present on neck 108 and/or base 104). The glossy portion 112b may only be present on a portion of the sidewall 106 (e.g., an image, letter, etc.). In FIG. 1C, the glossy portion 112c may cover substantially all of sidewall 106 (e.g., is not present on neck 108 and/or base 104). The matte portion 110c may only be present on a portion of the sidewall 106 (e.g., an image, letter, etc.). While FIGS. 1A-1C show one matte portion 110 and one glossy portion 112, it will be appreciated that a desired decoration may include any number of glossy and matte portions. For example, the desired decoration may include one or more portions, two or more portions, three or more portions, four or more portions, five or more portions, ten or more portions, twenty or more portions, 50 or more portions, or greater with any permutation(s) of colors with glossy and/or matte portions. Furthermore, the glossy and matte portions may include any level of reflectivity from high gloss to matte, and any measurement in between.

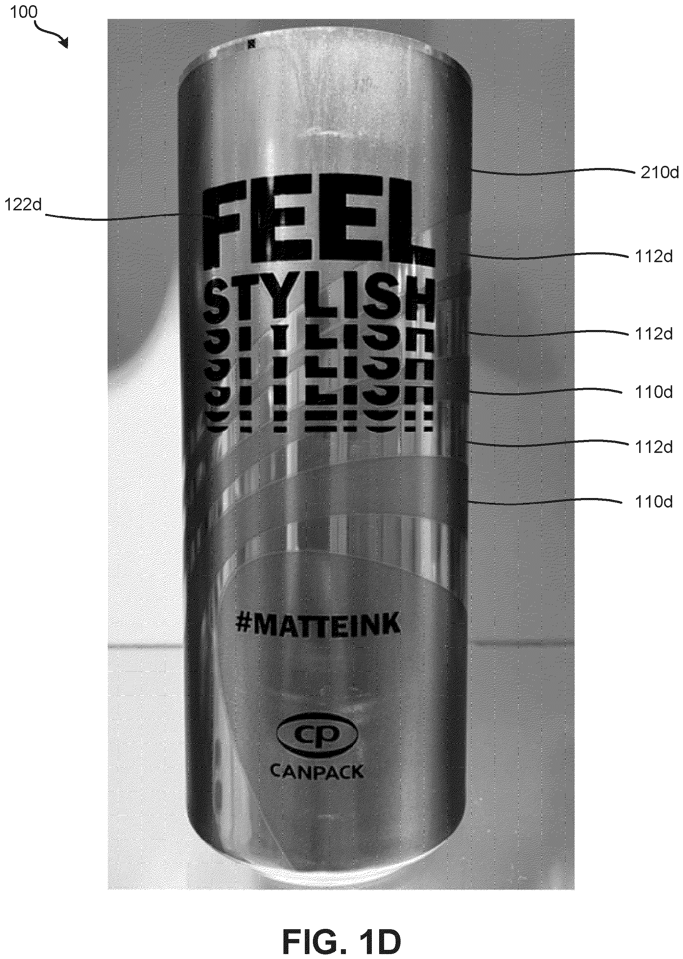

In FIG. 1D, the container 100 may include a number of matte portions 110d and a number of glossy portions 112d. As shown in FIG. 1D, both the matte portions 1 10d and the glossy portions 112d are gold. The color (gold) of the matte portions 110d and the glossy portions 112d may be approximately equal in intensity, while the luster, or reflectivity, of the matte portions 110d are less than that of the glossy portions 112d. Also, a black glossy portion 122d may also have similar intensity to that of the glossy portions 112d. Although the container 100 in FIG. 1D illustrates the matte portions 110d and glossy portions 112d in gold, and the black glossy portion 122d in black, it should be understood that any color ink may be used to similar effect. For example, any portion of the desired decoration may be red, green, blue, yellow, etc. and any shade and/or combination thereof. Any color of the desired decoration may be made matte or glossy by using the techniques and systems described herein. Furthermore, as described in FIG. 1, a single, glossy lacquer may be applied to all of the matte portions 110d, the glossy portions 112d, and the black glossy portions 122d, enabling a more efficient production of the container 100, with the type of underlying ink within each region controlling the final reflectivity of each matte and glossy portion. Additionally, while shown with at least one glossy portion 112 and one matte portion 110, it will be appreciated that the containers 100 may include only matte portions 110 in some embodiments. In such embodiments, the entire decoration may be applied using one or more matte inks, with a single matte or glossy lacquer applied over the top of the inks.

In some embodiments, multiple portions of the container 100 may include multiple matte portions of differing colors and/or reflectivity levels. For example, first matte portion may be green and a second matte portion may be blue. For a given level of reflectivity, each differently colored ink may include a respective amount of matting agent. The first matte portion may include green ink and matting agent in a ratio of 3:7, whereas the second matte portion may include blue in and matting agent in a ratio of 2:5, which may produce different reflectivity levels in some embodiments. A third portion may be glossy, and the ink may therefore include no matting agent or only a small quantity of matting agent.

As noted above, a single lacquer may be applied to the container 100. As discussed above, at least a portion of the matting agent may extend above the single lacquer. Therefore, even though the single lacquer may be glossy, the first matte portion and the second matte portion may still be characterized by a lower reflectivity (i.e., have a matte finish). Because the inks in the first matte portion and the second matte portion may include the matting agent, the single lacquer may not include any (or only a low quantity) matting agent and the third portion may appear glossy.

Stated otherwise, a wide variety of inks, each with varying amounts of matting agent, may be applied to the container 100 to form any decoration, image, etc. with any number of glossy and matte portions. The application of a single lacquer may enable the matte portions to exhibit reduced reflectivity while allowing the colors to still appear vivid. The glossy portions of the decoration may still retain their vividness and reflectivity. Thus, complex, multi-faceted decorations may be achieved.

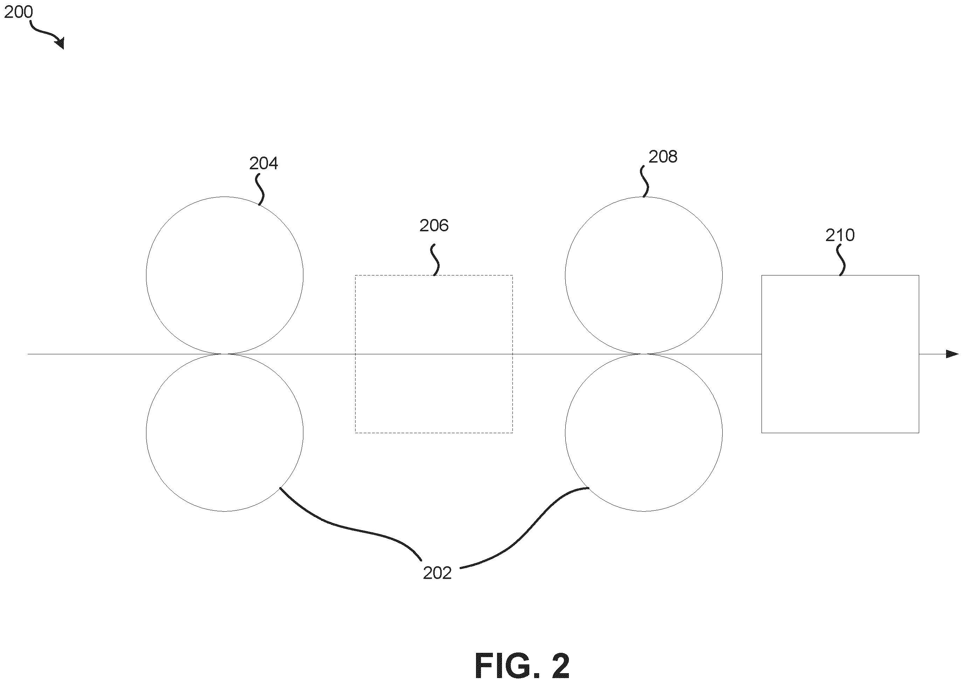

As known in the art, beverage cans (and other containers) may be manufactured in a production line in which a sheet of metal (such as aluminum) is formed into a can blank having an open top in a number of different shaping steps. Once formed, the can blank may be washed and/or etched to wash away lubricants and/or to prepare the surface of the can blank for printing. Once washed/etched, the can blank may be dried and transported to a decorator, which may apply a decoration (such as a brand name, product name, nutrition information, etc.) to an outer surface of the can blank. The decorator may apply any decoration to the outer surface of the can blank in one or more steps. FIG. 2 illustrates a system 3200 for applying a desired decoration with matte and glossy portions to a beverage container. System 200 may form part of a production line as described above and may be used to create selectively matte graphics. System 200 may include a decorator 202. Decorator 302 may be a can decorator similar to the decorators disclosed in U.S. Patent No. 11,794,468 and U.S. Patent No. 11,926,145, the entire contents of which are hereby incorporated by reference. Decorator 202 may receive can blanks (which may be similar to container 100) that include a container body having a base and cylindrical sidewall. Decorator 202 may include at least one printing device 204 and at least one coating device 206. Printing device 204 may include an offset printer (e.g., printer using a number of ink-coated blankets or rollers to perform a rotation printing process to generate a desired decoration), an inkjet printer, and/or other printing apparatus. For example, the printing device 204 may be an 8-color offset machine (or other number of colors) that may apply ink to the outer surface of the can blank using a rotation printing process to generate a desired decoration. Printing device 204 may print or otherwise apply one or more inks to at least a portion of an outer surface of the sidewall to apply a decoration (such as a brand name, product name, nutrition information, etc.) to an outer surface of the can blank. Printing device 204 may apply the decoration to the outer surface of the can blank in one or more steps. For example, printing device 204 may apply one or more colors of ink to the outer surface of the can blank. For example, the printing device 204 may apply one or more of the inks using between 1 layer and 10 layers. The layers of ink(s) may be applied to the surface of the can blank at a collective thickness between 20 microns and 70 microns, inclusive. For example, the ink(s) may be applied to a thickness of about 20 microns, about 30 microns, about 40 microns, about 50 microns, about 60 microns, and/or about 70 microns. Some of the inks may be applied to a first thickness and other inks may be applied to a second thickness.

. The inks applied by the printing device 204 may include matte inks that include a matting agent and/or glossy inks that do not include a matting agent. For example, a matte ink or a glossy ink may be applied to a portion of the outer surface of the can blank. Then a different matte ink and/or glossy ink (e.g., a different color and/or a different luster) may be applied to a portion of the outer surface to form a pattern or other decoration. In other embodiments, printing device 204 may apply different matte and/or glossy inks in a repeating pattern of shapes. The repeating pattern of shapes may then form a desired decoration. In yet other embodiments, printing device 304 may apply matte and/or glossy inks to form text, images, and/or other decorations.

The matting agent within the matte inks may include silica particles such as synthetic aluminum silicates. Silica particles may provide porous, uneven shapes that may reduce gloss. For example, when added to inks, the silica particles may extend past a surface of the film of the ink as the ink shrinks during drying and/or curing, creating a matte finish. In some embodiments, the matting agent may include wax particles, such as Polyethylene, Polypropylene, Carnauba, or Polytetrafluorethylene (PTFE). Waxes may float to the top surface of the ink and may help reduce gloss. The matting agent may include thermoplastic resin in some embodiments. The matting agent may include additional materials, such as a light stabilizer, a UV absorber, one or more solvents (such as organic solvents), and/or other additives. A solids content of the matting agent may be between about 20% and 75% by weight of the matting agent in various embodiments.

An average particle size (e.g., a diameter and/or other largest lateral dimension) of the particles within the matting agent may be within a range of 0.5 microns to 10 microns, inclusive, between 0.5 microns and 5 microns, or between 0.5 microns and 2.5 microns. In some embodiments, the average particle size may be at least 1 micron. Larger particle sizes may increase the visible matte effect and color intensity of the final can, but may impart a noticeable texture on the surface of the final can.

For matte inks, the ratio of ink to matting agent may be at least 1:5, at least 1:4, at least 1:3, at least 1:2, at least 1:1, and/or greater. Previously, matte inks may have included about 1:9 (e.g., 10% ink). Thus, the matte ink may include from between 20% to 50% ink by weight (based on the weight of the matted ink) of the ink and from between 50% to 80% by weight (based on the weight of the matted ink) of the matting agent, greatly increasing the amount of ink as compared to conventional matting agents. The increased ink levels within the matte ink may be possible due to the larger particle sizes, as well as a thinner coating of lacquer as will be discussed below. Because of the increased ink in the mixture, more intense colors may be present in the desired decoration. In some embodiments, the matte ink may also include a solvent, such as water, one or more alcohols, one or more hydrocarbons, and/or other solvents, which may facilitate mixing of the matting agent and ink. The solvent may be provided in various quantities, such as between 1% and 20% by weight of the matte ink. The matting agent, solvent, and/or ink may be mixed prior to being supplied to the decorator (such as decorator 114).

In some embodiments, the printing device 204 may apply one or more inks (including one or more matte inks and/or one or more glossy inks) to the exterior surface of the can blank to form a design having portions of varying reflectivity on a single can blank. As discussed above, conventional methods of applying a matte finish (or a glossy finish) to a can may only permit a single reflectivity (i.e., "matte-ness") to be present on a can. By mixing the matting agent in with the inks as described above, some portions of the can blank may have a matte finish while other may have a glossy finish. Additionally, different portions of the can blank having a matte finish may have different reflectivity levels from one another and/or portions of the can blank having a glossy finish may have different reflectivity levels from one another. This may be achieved, for example, by applying inks that have different quantities of the matting agent to different regions of the can blank. For example, inks having a larger amount of the matting agent may have a stronger matte finish, while areas with little or no matting agent may have a glossier finish. Within the matte finish regions, the larger size of the particles within the matting agent may allow more color provided by the ink to be visible, resulting in more intense colors regardless of the reflectivity desired in any particular portion. The desired decoration may therefore include matte portions and glossy portions with a desired color intensity throughout.

In some embodiments, decorator 202 may optionally include a heating device 208 that is disposed between printing device 204 and coating device 206. Heating device 208 may be operable to fully or partially cure the ink (e.g., via a thermochromic process) prior to and/or as the container is transported to coating device 206. For example, heating device 208 may be an oven, convection device and/or other heater that is configured to expose the beverage container to a temperature below the curing temperature of the ink of between 130 °C and 160 °C to fully or partially cure the ink.

After printing the decoration (and optionally after fully or partially drying and/or curing the ink), the can blanks may be transported to the coating device 206, which may apply an overprint lacquer, such as a glossy or matte lacquer atop the ink to protect the ink. Coating device 206 may be a spray coater, a roller coater, an anilox coater, a gravure coater, and/or other type of coater. Due to the size of the particles within the matting agent, at least a portion of some of the particles may extend beyond an outer surface of the lacquer, which may enable the particles to impart a matte finish in the regions of the matte ink. Thus, the color of the matte ink may be brighter and not require a separate lacquer. For example, larger particles in a matting agent may allow more ink to fill gaps between the particles. Thus, more color may show through in a finished design. For can blanks including only a matte ink, the overprint lacquer may be a matte lacquer or may be a glossy lacquer. For can blanks including both matte inks and glossy inks, the overprint lacquer may be a glossy lacquer. Use of a glossy lacquer will enable the matte inks to appear matte as explained above, while still imparting a glossy finish in regions of the glossy ink that does not include a matting agent. This may enable a single glossy overprint lacquer to be applied substantially uniformly over a can blank, while still enabling the design to include both matte finish and glossy finish regions.

The coating device 208 may apply the overprint lacquer in one or more layers having a collective thickness of about 0.5 microns to about 4.0 microns, inclusive. For example, the overprint lacquer may be applied to a thickness of about 0.5 microns, about 1 micron, about 2 microns, about 2.5 microns, about 3 microns, and/or about 4 microns. In some embodiments, a single lacquer may be applied to the matte ink and the glossy ink, which may produce can blanks having both matte portions corresponding to areas of the matte ink and glossy regions corresponding to areas of the glossy ink (e.g., ink without the matting agent). The single lacquer may be used, at least in part, because of the matting agent used in the matte inks. Because the particles of the matting agent may be of sufficient size (e.g., about 1 micron to about 2.5 microns), some or all of the particles may extend above the surface of the single lacquer. A single glossy lacquer may be used, therefore, and the reflectivity (or vividness) of the colors in the matte portions may be maintained. Thus, the production of the can blanks having both matte and glossy portions may be more efficient. In other embodiments, different lacquers may be used. Additionally, the reduced thickness of the overprint lacquer relative to conventional cans (e.g., above 4 microns, above 5 microns, or more) helps prevent the overprint lacquer from subduing the colors of the matte ink and also enables a lower quantity of matting agent to be included in the ink. For example, due to the lower total thickness of the overprint lacquer, less matting agent is needed in the matte ink to ensure that some of the particles of the matting agent extend beyond the lacquer and provide the matte finish in desired regions of the design.

At typical line speeds the time between a can body being inked to the lacquer being applied is in the region of 30-120 milliseconds. The lacquer and/or ink may be fully dried and cured within a curing oven. The can blanks may then be transported to a necker for shaping a top end of the can blank to form a neck. Components of system 200 may be sized to handle large amounts of cans, often enabling texturing and/or other processing of at least 1200 cans per minute.

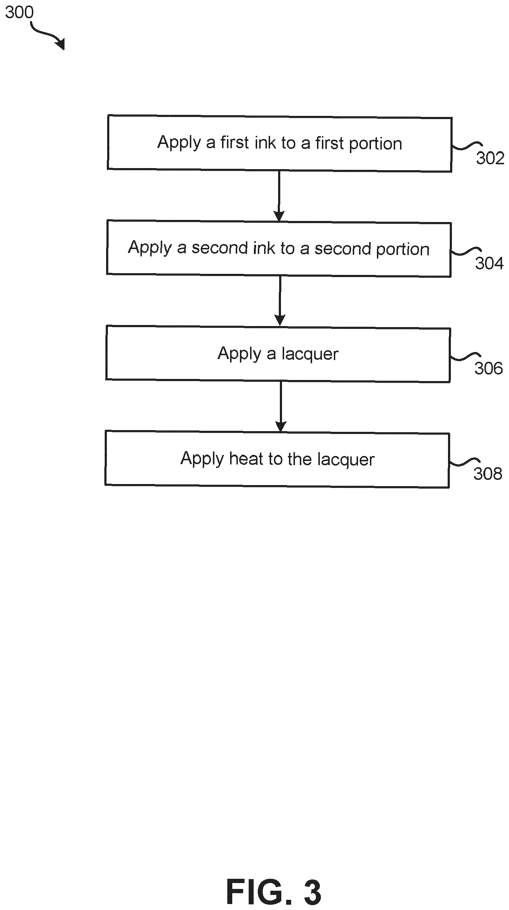

FIG. 3 illustrates a flowchart of a method 300 for a producing a beverage container with matte and glossy portions. The method 300 may be performed by some or all of the devices and systems described herein (e.g., the systems 100 and 200 in FIGS. 1 and 2, respectively). Some or all of the steps of the method 300 may be performed in a different order than is shown, and/or some of the steps may be combined with other steps. In some embodiments, some steps may be skipped altogether.

At step 302, the method 300 may include applying a first ink to a first portion of the beverage container. The ink may be applied by a decorator such as the decorator 202 in FIG. 2. The first ink may include a matting agent. Prior to supplying the first ink to the decorator for application to the beverage container, an ink may be mixed with the matting agent to form a matte ink. For example, the ink may be mixed with the matting agent and optionally a solvent that may promote mixing of the matting agent and the ink. The ratio of ink to matting agent within the first ink (e.g., the matte ink) may be within a range of 1:4 to 1:1. For example, the matting agent may be present within the first ink in a quantity of between 50% by weight of the matte ink and 80% by weight of the matte ink, with the first ink including between 20% to 50% ink by weight of the matte ink). When present, the solvent may be included at an amount of between 1% and 20% by weight of the matte ink. The matting agent may include matting particles formed from silica, wax, thermoplastic resin, and/or other matting particles. An average size (e.g., largest lateral dimension) of the matting particles may be within a range of 0.5 microns to 10 microns, inclusive. The first ink may be applied in or one or more layers to a collective thickness of about 20 microns, about 30 microns, about 40 microns, about 50 microns, about 60 microns, and/or about 70 microns. In The first ink may be any color, such as black, white, green, red, blue, and/or any shade and/or combination thereof.

At 304, the method 300 may include applying a second ink to a second portion of the beverage container. The second ink may be applied by the same decorator that applies the first ink and/or by a separate decorator. In some embodiments, the first ink and the second ink may be applied sequentially, while in other embodiments the first and second inks may be applied simultaneously, such as by using a roll coater. The second ink may not include the matting agent (i.e., the second ink may be a glossy ink) and/or may include a different quantity of the matting agent (e.g., may have a different degree of matte finish and/or may be at least slightly glossy). The second portion of the beverage container may be separate from the first portion and/or overlap with some or all of the first portion. The second ink may be applied to a thickness of about 20 microns, about 30 microns, about 40 microns, about 50 microns, about 60 microns, and/or about 70 microns. The second ink may be any color, such as black, white, green, red, blue, and/or any shade and/or combination thereof.

At 306, the method 300 may include applying a lacquer over the first ink and the second ink. The lacquer may be applied by a lacquer applicator, such as the coating device206. The lacquer may be applied as one or more layers to a collective thickness of in a range of between 0.5 and 4.0 microns, such as about 0.5 microns, about 1 micron, about 1.5 microns, about 2 microns, about 3 microns, and/or about 4 microns. The lacquer may be a single glossy and/or clear lacquer, providing a shiny (or reflective) finish to the second ink. However, due to the presence of the matting agent, the large size of the particles within the matting agent, and the low coating thickness of the lacquer, the first ink will still provide a visible matte finish. In some embodiments, such as those in which both inks are matte inks, the single lacquer may include the matting agent and/or a different matting agent. The use of a matte lacquer will result in the entire decoration having a matte finish. In some embodiments, multiple lacquers may be applied. For example, a clear lacquer may be applied to the second ink and a matte lacquer may be applied to the first ink.

At step 308, applying heat to the lacquer, the first ink, and the second ink. The heat may (at least partially) cause the first ink, the second ink, and/or the lacquer to cure to the first portion and the second portion of the beverage container to form a decoration. The decoration may include a first graphic corresponding to the first portion and a second graphic corresponding to the second portion. The first graphic may be characterized by a matte finish, and the second graphic may be characterized by a glossy finish. In other words, the first graphic may include a first reflectivity, and the second graphic may include a second reflectivity. The first graphic and the second graphic may be of the same color (e.g., gold as in the matte portions 110d and the glossy portions 112d in FIG. 1D). In other embodiments, the first graphic and the second graphic may each include a separate color (e.g., the black glossy portions 122d).

It should be noted that the systems and devices discussed above are intended merely to be examples. It must be stressed that various embodiments may omit, substitute, or add various procedures or components as appropriate. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention. For example, it is possible to decorate any surface using the ink and varnish combinations of the invention to form the specific height, size and percentage of protrusions, including on a can end or the tab affixed via a rivet to the can end.

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of ±20% or ±10%, ±5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as such variations are appropriate to in the context of the systems, devices, circuits, methods, and other implementations described herein.

Where a range of values is provided, it is understood that each intervening value, to the smallest fraction of the unit of the lower limit, unless the context clearly dictates otherwise, between the upper and lower limits of that range is also specifically disclosed. Any narrower range between any stated values or unstated intervening values in a stated range and any other stated or intervening value in that stated range is encompassed. The upper and lower limits of those smaller ranges may independently be included or excluded in the range, and each range where either, neither, or both limits are included in the smaller ranges is also encompassed within the technology, subject to any specifically excluded limit in the stated range. Where the stated range includes one or both of the limits, ranges excluding either or both of those included limits are also included.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

## Claims

1. A beverage container, comprising:
a container body comprising an outer surface; and
a graphic disposed on at least a portion the container body, the graphic manufactured using a first ink, a second ink, and a lacquer, the graphic comprising:
a first portion, **characterized by** a first color and a first reflectivity, wherein the first ink includes a matting agent; and
a second portion, **characterized by** a second color and a second reflectivity, different than the first reflectivity.

2. The beverage container of claim 1, wherein the matting agent comprises a synthetic aluminum silicate.

3. The beverage container of claim 1, wherein the matting agent comprises at least one of Polyethylene, Polypropylene, Carnauba, or Polytetrafluorethylene (PTFE).

4. The beverage container of claim 1, wherein the ink and/or the lacquer is applied to the beverage can via a thermochromic process.

5. The beverage container of claim 1, wherein at least a portion of the beverage container comprises aluminum.

6. The beverage container of claim 1, wherein a ratio of the ink to the matting agent is within a range of 2:1 to 4:1.

7. The beverage container of claim 1, wherein the lacquer is applied to the beverage container at a thickness of about 1 micron to about 5 microns, inclusive.

8. The beverage container of claim 1, wherein the lacquer comprises a glossy lacquer.

9. The beverage container of claim 1, wherein the lacquer comprises a matte lacquer.

10. The beverage container of claim 1, wherein the lacquer includes a second matting agent.

11. A method of producing a beverage container with matte and glossy portions, comprising:
applying a first ink to a first portion of the beverage container, the first ink comprising a matting agent;
applying a second ink to a second portion of the beverage container;
applying a lacquer over the first ink and the second ink;
applying heat to the lacquer, the first ink, and the second ink such that the first ink, the second ink, and the lacquer adhere to the first portion and the second portion of the beverage container to form a decoration, the decoration comprising:
a first graphic corresponding to the first portion **characterized by** a matte finish; and
a second graphic corresponding to the second portion **characterized by** a glossy finish.

12. The method of claim 11, wherein the lacquer comprises the matting agent.

13. The method of claim 11, wherein the first ink comprises a first color and the second ink comprises a second color.

14. The method of claim 11, wherein the first ink and the second ink comprise a first color.

15. The method of claim 11, wherein the lacquer comprises a glossy lacquer.

16. The method of claim 11, wherein a ratio of the first ink to the matting agent is within a range of 2:1 to 4:1.

17. A system for applying glossy and matte finishes to a beverage container, comprising:
a printing device that is configured to apply a first ink and a second ink to at least a portion of an outer surface of a beverage container;
a coating device that is configured to apply a lacquer over the first ink and the second ink; and
a heating device that is configured to apply heat to the lacquer, the first ink, and the second ink to form a decoration, the decoration comprising:
a first graphic **characterized by** a matte finish; and
a second graphic **characterized by** a glossy finish.

18. The system of claim 17, wherein the first ink and/or the second ink are applied to a thickness of between 20 microns and 70 microns, inclusive.

19. The system for applying glossy and matte finishes to a beverage container of claim 17 wherein:
the system is configured to glossy and matte finishes at least 800 cans per minute.

20. The system of claim 17, wherein:
the heating device comprises a pin oven.
